(19) Europäisches Patentamt
European Patent Office
Office européen des brevets

(11) **EP 1 922 386 B1**

(12) **FASCICULE DE BREVET EUROPEEN**

(45) Date de publication et mention
de la délivrance du brevet:
**11.11.2009 Bulletin 2009/46**

(51) Int Cl.:
*C09K 19/02* *(2006.01)* *G02F 1/1337* *(2006.01)*
*C09K 19/38* *(2006.01)*

(21) Numéro de dépôt: **06793129.5**

(22) Date de dépôt: **31.08.2006**

(86) Numéro de dépôt international:
**PCT/EP2006/065895**

(87) Numéro de publication internationale:
**WO 2007/028768 (15.03.2007 Gazette 2007/11)**

(54) **PROCÉDÉ D'ÉLABORATION D'UN MATÉRIAU À CRISTAUX LIQUIDES À BANDE DE RÉFLEXION DE LA LUMIÈRE ÉLARGIE**

VERFAHREN ZUR HERSTELLUNG EINES FLÜSSIGKRISTALLMATERIALS MIT VERBREITERTEM LICHTREFLEXIONSBAND

METHOD OF PRODUCING A LIQUID CRYSTAL MATERIAL HAVING A BROADENED LIGHT REFLECTION BAND

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.09.2005 FR 0509158**

(43) Date de publication de la demande:
**21.05.2008 Bulletin 2008/21**

(73) Titulaire: **Centre National de la Recherche Scientifique (CNRS)**
**75016 Paris (FR)**

(72) Inventeur: **MITOV, Michel**
**F-31000 Toulouse (FR)**

(74) Mandataire: **Tetaz, Franck Claude Edouard et al**
**Cabinet Régimbeau**
**139, rue Vendôme**
**69477 Lyon Cedex 06 (FR)**

(56) Documents cités:
**EP-A- 0 346 911      EP-A- 0 982 605**
**EP-A- 1 249 483      EP-A- 1 295 929**
**WO-A-98/57223      GB-A- 2 355 720**
**US-A- 6 010 643      US-A1- 2003 098 442**
**US-A1- 2004 011 994      US-B1- 6 217 948**

**EP 1 922 386 B1**

## Description

DOMAINE DE L'INVENTION

La présente invention concerne le domaine des cristaux liquides, et plus particulièrement des matériaux à cristaux liquides aptes à réfléchir une lumière incidente.

ETAT DE LA TECHNIQUE

Les matériaux à base de cristaux liquides sont aujourd'hui de plus en plus utilisés du fait de leurs propriétés optiques qui permettent de maîtriser des ondes lumineuses visibles et invisibles (infrarouge IR et ultraviolet UV).

Des matériaux à base de cristaux liquides cholestériques ont notamment été développés, ces derniers présentent en effet des propriétés optiques différentes des cristaux liquides nématiques, de par l'existence de leur structure en hélice. Cette organisation en hélice permet aux cristaux liquides cholestériques de réfléchir sélectivement la lumière avec une longueur d'onde associée $\lambda_R$ reliée au pas p de la structure en hélice par la relation (en incidence normale) :

$$\lambda_R = n.p$$

où n est l'indice de réfraction moyen du cristal liquide cholestérique ($n=(n_e+n_o)/2$ avec ne et $n_o$ les indices optiques extraordinaire et ordinaire). La largeur $\Delta\lambda$ de la bande de réflexion est reliée à $\lambda_R$, à n et à la biréfringence $\Delta n=n_e-n_o$ par la relation :

$$\Delta\lambda = \lambda_R.\Delta n/n$$

Comme $(\Delta n)_{max}$ est de l'ordre de 0,3 pour les composés organiques usuels, $\Delta\lambda$ se limitera le plus souvent dans le visible à 100 nm en étant typiquement égal à 50 nm. Ainsi, seule une fraction limitée des rayons peut être réfléchie par un cristal liquide cholestérique usuel.

Même si, dans certaines applications, la sélectivité en réflexion dans les matériaux à base de cristaux liquides cholestériques est recherchée, comme par exemple dans EP 1 295 929, il existe de nombreuses applications pour lesquelles une telle sélectivité est un inconvénient.

En effet, pour moduler efficacement l'énergie (lumière, chaleur) traversant un vitrage constitué d'un matériau à cristaux liquides par exemple, il faut que ce dernier soit apte à réfléchir un nombre important de longueurs d'ondes. Cela permet d'améliorer le bilan thermique de certaines enceintes fermées, telles que celles de bâtiments ou de moyens de transport, et de permettre ainsi des économies d'énergie (en s'affranchissant par exemple de la climatisation).

Outre le domaine des vitrages dits intelligents, des matériaux à cristaux liquides présentant des propriétés de réflexion étendues, non usuelles, trouvent également des applications dans de nombreux autres secteurs tels que les télécommunications (matériaux photoniques réflecteurs), l'optique (lunetterie anti-éblouissement), le domaine thermique (revêtement réflecteur IR), le domaine militaire (furtivité IR), et l'affichage (afficheur réflecteur noir sur blanc sans polariseur).

Des travaux pionniers du groupe Philips ont permis d'élaborer des matériaux à cristaux liquides cholestériques solides permettant de réfléchir de la lumière sur une bande de longueurs d'onde plus large, de l'ordre de 300 nm (cf. D.J. Broer, J. Lub and G.N. Mol, Nature 378, 467 [1995]). Cette augmentation est une conséquence de la structure du matériau à cristaux liquides cholestériques qui présente une hélicité suivant un gradient de pas.

Les documents EP 1 249 483, US 6 217 948, EP 0 982 605, US 2003/0098442, US 2004/0011994, EP 0 346 911, GB 2 355 720, US 6 010 643, et WO 98/57223 donnent d'autres exemptes de fabrication de matériaux cristaux liquides dans lesquels le pas de l'hélice des cristaux liquides est modifié cette modification étant figée par polymérisation.

Un but de la présente invention est de fournir un procédé d'élaboration alternatif d'un matériau à cristaux liquides présentant des propriétés de réflexion étendues.

EXPOSE DE L'INVENTION

A cet effet, on prévoit selon l'invention un procédé d'élaboration d'un matériau à cristaux liquides adressable par un champ électrique, **caractérisé en ce qu**'il comprend les étapes consistant à :

- Former un mélange de cristaux liquides ayant une structure en hélice comprenant un premier cristal liquide (A) non-photoréactif et un deuxième cristal liquide (B) photoréactif, le premier cristal liquide (A) comprenant des premières molécules de cristal liquide (A1) chirales et le premier cristal liquide (A) étant à anisotropie diélectrique positive, et le deuxième cristal liquide (B) étant dans une concentration comprise entre 3% et 5% du mélange ;
- Appliquer un premier traitement au mélange de cristaux liquides, le premier traitement étant réalisé à température constante et modifiant un pas de l'hélice du mélange ;
- Appliquer un deuxième traitement au mélange de façon à ce que le deuxième cristal liquide (B) forme un réseau de polymère, le deuxième traitement étant effectué pendant tout ou partie de la durée du premier traitement, la formation du réseau de polymère pendant tout ou partie de la durée du premier traitement permettant au matériau à cristaux liquides conserve une mémoire des modifications du pas de l'hélice.

Des aspects préférés mais non limitatifs du procédé d'élaboration de matériau à cristaux liquides selon l'invention sont les suivants :

- le mélange présente un polymorphisme comprenant au moins une phase cholestérique et/ou smectique C chirale ;
- le premier cristal liquide (A) peut changer de signe d'anisotropie diélectrique en fonction de la fréquence, auquel cas il comprend en outre des deuxièmes molécules de cristal liquide (A2) ;
- le deuxième cristal liquide (B) est apte à être activé par irradiation UV;
- le mélange comprend en outre un agent photo-initiateur (C) pour favoriser la formation du réseau de polymère sous irradiation UV ;
- le mélange comprend en outre un agent dispersant (D) pour favoriser une dispersion des composants du mélange et modifier une dynamique du matériau à cristaux liquides lors d'un adressage électrique ;
- le mélange comprend en outre un inhibiteur de polymérisation thermique (E) ;
- le mélange comprend en outre un agent absorbant (F) apte à absorber le rayonnement UV de façon à ce que le matériau à cristaux liquides ait un gradient de structure et/ou de fonction ;
- le deuxième traitement est une irradiation UV apte à polymériser le mélange, effectuée de préférence avec un rayonnement UV ayant une longueur d'onde de 365 nm et une puissance de 0,1 mW/cm$^2$, pendant un temps d'exposition compris entre 30 et 60 minutes ; il permet une réticulation ou une gélification du mélange ;
- le deuxième traitement peut être une trempe apte à vitrifier le mélange ;
- le premier traitement peut consister à appliquer un champ électrique au mélange, ayant par exemple une fréquence de 1 kHz et variant de 0,5 à 20 V/$\mu$m;
- le premier traitement peut consister à appliquer un champ magnétique au mélange, variant par exemple de 2 à 15 kG ;
- le premier traitement peut consister à appliquer une pression mécanique sur le mélange ;
- le premier traitement peut être une irradiation électromagnétique, auquel cas le premier cristal liquide comprend en outre des troisièmes molécules de cristal liquide (A3) afin que le premier traitement modifie la conformation moléculaire du mélange ;
- cette irradiation électromagnétique peut être effectuée par un rayonnement UV ayant une longueur d'onde comprise entre 250 et 365 nm, une énergie comprise entre 1 et 100 mJ/cm$^2$, et pendant un temps d'exposition compris entre 1 et 3600 secondes, de préférence entre 60 et 600 secondes ;
- cette irradiation électromagnétique peut être effectuée par un rayonnement visible ayant une longueur d'onde supérieure à 435 nm, une énergie comprise entre 1 et 100 mJ/cm$^2$, et pendant un temps d'exposition compris entre 1 et 3600 secondes, de préférence entre 60 et 600 secondes ;
- d'appliquer l'un quelconque des traitements, le mélange est introduit dans une cellule capacitive comprenant deux substrats recouverts d'un film conducteur.

On prévoit en outre un dispositif à cristaux liquides comprenant un substrat sur lequel est disposé un matériau à cristaux liquides élaboré conformément au procédé selon l'invention. Ce dispositif à cristaux liquides peut en outre comprendre un autre substrat recouvrant le matériau à cristaux liquide, de façon à former une cellule capacitive.

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 est une représentation schématique d'une cellule contenant le matériau à cristaux liquides selon l'invention ;
- la figure 2 est un graphique mettant en évidence la modification du spectre de lumière transmise par un matériau à cristaux liquides élaboré selon l'invention.

DESCRIPTION DETAILLEE DE L'INVENTION

Un cristal liquide cholestérique étant un cristal liquide de type nématique chiral, les molécules de cristal liquide le composant forment une structure en hélice h de pas p. Comme on l'a rappelé plus haut, cette organisation en hélice permet à un cristal liquide cholestérique de réfléchir sélectivement la lumière (réflexions de Bragg) avec une longueur d'onde associée $\lambda_R$ qui dépend du pas p de la structure en hélice et de l'indice de réfraction moyen n.

Le matériau à cristaux liquides selon l'invention est élaboré de manière à ce qu'il soit apte à réfléchir de la lumière sur une large bande de longueurs d'onde.

Le milieu de départ permettant d'élaborer ce matériau à cristaux liquides est un mélange qui possède une structure en hélice de par sa composition.

Ce mélange comporte en effet un premier cristal liquide (A) non-photoréactif et un deuxième cristal liquide (B) photoréactif. De manière générale, on prendra un premier cristal liquide (A) chiral. Néanmoins, dans le cas où le premier cristal liquide (A) n'est pas chiral, on choisira un deuxième cristal liquide (B) chiral, de sorte que le mélange des premier et deuxième cristaux liquides (A et B) confère au mélange une structure en hélice.

Le premier cristal liquide (A) non-photoréactif, qui peut être de faible masse molaire ou être un polymère, peut être constitué de molécules identiques ou d'un mélange de plusieurs molécules. Ce premier cristal liquide (A) pourra être choisi dans la famille des cyanobiphényls ou cyanoterphényls et esters reliés.

Une fraction du premier cristal liquide (A) pourra comprendre par exemple les composés E7, BL001, E44 ou E63 de Merck Ltd. ou ROTN-570, TNO623 ou TN10427 de Hoffman-La Roche.

En outre, le premier cristal liquide (A) comprend, en tout ou en partie, des molécules de cristal liquide chirales (A1). Du fait de ces molécules chirales, le mélange présente un polymorphisme qui comprend au moins une phase cholestérique (aussi appelée nématique chirale) et/ou une phase smectique C chirale. Ces molécules de cristal liquides (A1) sont généralement prises non photoréactives.

Ces premières molécules (A1) pourront par exemple être choisies dans la famille des cyanobiphényls ou cyanoterphényls et esters reliés. On pourra notamment choisir un composé dans la famille des Licrilite™ (Merck Ltd.) tels que BL094 ou BL095 ou parmi les composés suivants : C15, CB15, ZLI-4571, ZLI-4572 (Merck Ltd.)

Le premier cristal liquide (A) est à anisotropie diélectrique positive. Il pourra être un cristal liquide dit dual, c'est-à-dire changeant de signe d'anisotropie diélectrique en fonction de la fréquence, s'il comprend des deuxièmes molécules de cristal liquide (A2) particulières.

On pourra par exemple choisir ces deuxièmes molécules de cristal liquide (A2) parmi les composés suivants :

- 2F-3333 (Rolic Research Ltd.) ;
- 4-pentylphenyl 2-chloro-4-(4-pentyl-benzoyloxy) benzoate ou 4-octylphenyl 2-chloro-4-(4-heptylbenzoyl-oxy) benzoate (Acros Organics N. V.)

Le mélange comprend également un deuxième cristal liquide (B) photoréactif, de façon à rendre le mélange photosensible. En effet, ce deuxième cristal liquide (B) est apte à être activé par rayonnement UV. De préférence, ce deuxième cristal liquide (B) comporte plus d'un groupement fonctionnel, typiquement acrylate ou méthacrylate.

Lorsque la concentration en deuxième cristal liquide (B) est minoritaire, entre 3% et 5%, le matériau à cristaux liquides sera, après traitement, adressable par un champ électrique, c'est-à-dire que l'on pourra faire varier ses propriétés optiques en fonction d'un champ électrique appliqué.

Le deuxième cristal liquide (B) est choisi par exemple parmi les composés suivants :

- RM257, RM82 (Merck Ltd.) ;
- BAB, BAB-6, BABB-6, BMBB-6 (L.-C. Chien, Recent Advances in Liquid Crystal Polymers, American Chemical Society Book Series, 1995) ;

- oligomères polyorganosiloxanes photoréticulables tels CLM012CN, CC4039, CC390, CC670, CC680, CC1500 (Wacker Chemie Ltd.; EP0711780B1; US005,641,850A).

De manière préférée, le mélange comprend en outre un photo-initiateur (C) destiné à activer la transformation du deuxième cristal liquide (B) suite à une irradiation UV par exemple. La concentration du photo-initiateur (C) peut varier entre 0,5 et 5,0% du constituant (B).

Ce composant (C) peut être choisi parmi les composés suivants :

- Irgacure 907, Irgacure 651, Darocur 1173 (Ciba-Geigy) ;
- 2,6-di-terbutyl-4-methylphenol (Sigma-Aldrich).

Le mélange pourra en outre comprendre un agent dispersant (D). Cet agent dispersant (D), représentant entre 1 et 30% du mélange, est destiné à favoriser la dispersion des espèces dans le mélange. Lorsque le matériau à cristaux liquides est apte à être adressé par un champ électrique, il permet également d'influencer la dynamique lors de la réorientation moléculaire.

L'agent dispersant (D) pourra par exemple être pris parmi les composés suivants :

- série des Disperbyk-160 (BYK Chemie Ltd.) ;
- Disperon #703 (Kusumoto Kasei Ltd.) ;
- #24000 (ICI Ltd.).

Le mélange pourra également comprendre un inhibiteur de polymérisation thermique (E). Cet inhibiteur de polymérisation thermique (E) est destiné à empêcher une polymérisation par voie thermique du deuxième cristal liquide (B) notamment. Ce composé sera pris dans des proportions comprises entre 0,001 et 5% du composé (B) ; il aura de préférence une concentration comprise entre 0,001 et 1 % du composé (B).

Cet inhibiteur de polymérisation thermique (E) sera par exemple choisi parmi les composés suivants : hydroquinone, 2-hydroxybenzophenone ou 4-methoxy-2-hydroxybenzophenone (Sigma-Aldrich).

Enfin, le mélange pourra également comprendre un agent absorbant (F) destiné à absorber le rayonnement UV afin de créer des matériaux à gradient de structure et/ou de fonction. Cet agent absorbant (F) représente typiquement entre 0,5 et 2% du mélange.

L'agent absorbant (F) sera pris par exemple dans la série des Tinuvin (Ciba-Geigy) comme le Tinuvin 1130.

Le mélange de ces différents composants est réalisé de façon homogène par brassage en température. Dans un mode de réalisation préféré, on choisira une température de brassage supérieure à la température de clarification de chacun des composés.

Une autre façon de réaliser le mélange consiste à placer les différents composés dans un tube de verre encapsulé et de soumettre ce tube de verre aux ultrasons, en chauffant ou non.

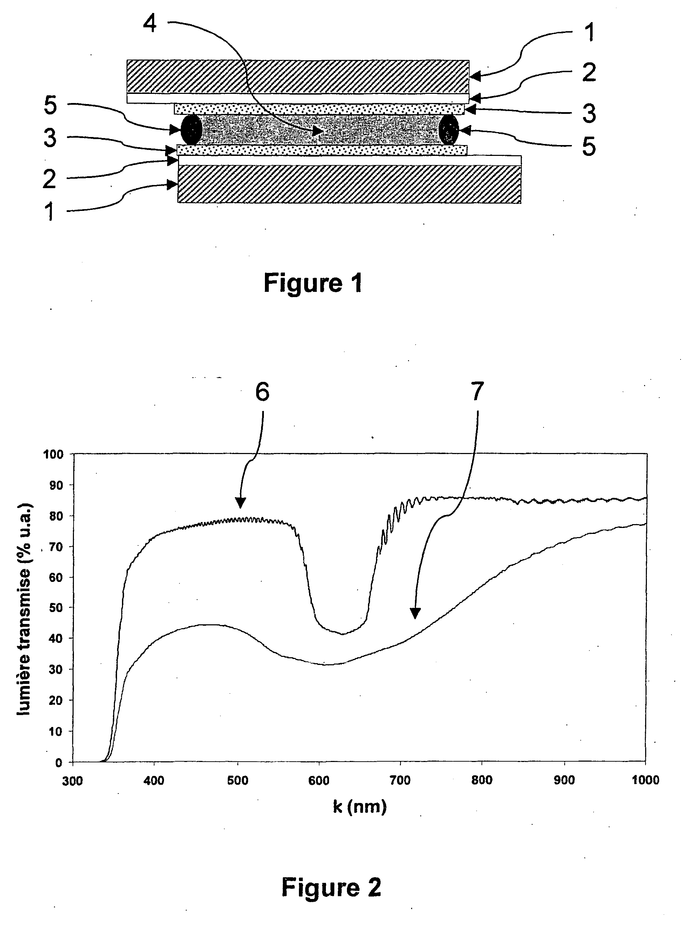

Le mélange pourra être introduit par capillarité dans une cellule capacitive fabriquée suivant le schéma de la figure 1.

Une telle cellule capacitive comprend deux substrats 1, de verre ou de plastique, chacun des substrats 1 étant recouvert d'un film conducteur 2, en ITO (Indium Tin Oxide) par exemple, et d'un film de surfactant 3, polyimide ou alcool polyvinylique (PVA).

Les deux ensembles ainsi formés sont gardés à distance entre 1 et 500 $\mu$m, de préférence entre 10 et 20 $\mu$m, par la présence d'espaceurs 5. On pourra par exemple prendre comme espaceur 5 des billes, ou des fibres en polymère, ou encore un film de plastique d'épaisseur calibrée.

Le mélange de cristaux liquides 4 décrit ci-dessus est ensuite introduit dans l'espace ainsi formé.

La préparation du mélange photosensible et son introduction dans la cellule capacitive sont des étapes réalisées de préférence dans l'obscurité.

Comme on l'a vu plus haut, lorsque la concentration en deuxième cristal liquide (B) est majoritaire, le matériau à cristaux liquides pourra constituer un film semi-libre (demeurant sur un substrat rigide ou flexible) ou libre (sans substrat).

Le mélange étant réalisé (et disposé sur un substrat ou dans une cellule capacitive, ou non), celui-ci doit être traité de façon à ce que le matériau à cristaux liquides résultant possède des performances et propriétés optiques étendues, non usuelles, notamment une bande de longueurs d'onde de réflexion élargie.

Une telle transformation des propriétés optiques du mélange passe par l'application de deux traitements, réalisés en tout ou en partie de manière simultanée.

Le premier traitement est destiné à modifier le pas de l'hélice caractéristique du mélange ayant une structure en hélice.

De manière préférée, on effectue ce premier traitement à température constante pour pallier à d'éventuelles modifications de paramètres physiques intrinsèques au mélange, suite à des variations de température.

Le deuxième traitement a pour but de donner au matériau à cristaux liquides une mémoire des modifications de pas de l'hélice dues au premier traitement.

Le deuxième traitement pourra par exemple être une irradiation UV réalisée pendant le changement de pas de l'hélice résultant du premier traitement. L'irradiation UV utilisée consiste en un rayonnement UV ayant une longueur d'ondes typiquement de l'ordre de 365 nm, et une puissance de 0,1 mW/cm$^2$, avec un temps d'exposition typique compris entre 30 et 60 minutes.

Du fait de ce mode d'élaboration, et notamment du deuxième traitement, découle la formation d'un réseau de polymère dans tout le volume du cristal liquide. Les propriétés orientationnelles du cristal liquide sont fortement influencées par la nature du réseau de polymère : distribution, homogénéité, symétrie, etc:

Comme une conséquence de ce mode d'élaboration, et notamment du fait que les premier et deuxième traitements sont réalisés au moins en partie de manière simultanée, le réseau de polymère formé procure au matériau à cristaux liquides une mémoire des modifications de pas de l'hélice qui surviennent pendant le premier traitement. Comme la bande de longueurs d'onde de réflexion de la lumière dépend du pas hélicoïdal, le matériau possède une bande élargie par rapport au cas classique, par exemple au milieu du spectre visible de 100 à quelques centaines de nanomètres contre une cinquantaine de nanomètres.

La figure 2, qui représente le pourcentage de lumière transmise en fonction de la longueur d'onde de cette lumière, permet sur un exemple particulier de comparer la bande de longueurs d'onde de réflexion d'un matériau à cristaux liquides n'ayant subi aucun des deux traitements (courbe 6) et d'un matériau à cristaux liquides ayant été réalisé suivant le mode opératoire de l'invention (courbe 7). On constate sur la courbe 6 que, en l'absence de traitement, la bande de réflexion est d'environ 85 nm, centrée sur une longueur d'onde moyenne de 620 nm, alors qu'après traitements, la bande de réflexion, toujours centrée sur une longueur d'onde moyenne de 620 nm, est d'environ 300 nm.

L'élargissement de la bande de réflexion obtenue dépend de l'amplitude de la variation du pas en fonction du paramètre de contrôle de la réaction ; plus cette amplitude est grande et plus la bande de réflexion est élargie.

Le premier traitement destiné à changer le pas de l'hélice peut consister en l'application d'un champ électrique. On pourra par exemple appliquer un champ électrique de fréquence 1 kHz, et variant entre 0,5 et 20 V/$\mu$m.

Il est également possible pour faire varier le pas de l'hélice d'appliquer un champ magnétique variant par exemple de 2 à 15 kG (de 0,2 à 1,5 T).

Une autre solution visant au changement du pas de l'hélice consiste à appliquer une pression mécanique sur la cellule capacitive.

Enfin, le premier traitement visant au changement de pas de l'hélice définissant la structure du mélange peut être réalisé par modification de la conformation moléculaire de la structure induite par un rayonnement électromagnétique, ce rayonnement électromagnétique pouvant être un rayonnement visible ou UV.

Pour ce faire, le premier cristal liquide (A) du mélange comprend des troisièmes molécules de cristal liquide (A3) qui représentent entre 0,1 et 10% du mélange, ces troisièmes molécules étant choisies parmi les composés suivants :

- famille des azobenzenes ou azoxybenzenes (Kurihara et al., Chem. Mater., 13, 1992, 2001; Kusumoto et al., Mol. Cryst. Liq. Cryst., 14, 727, 1993; Negishi et al., Chem. Lett., 319, 1996 et 583, 1996; Bobrovsky et al., Adv. Mater., 12, 1180-3, 2000; Kitaeva et al., Mol. Cryst. Liq. Cryst., 2, 261-279, 1992) dont 4,4'-dialkylazobenzenes (Moriyama et al., J. Mater. Chem., 11, 1003-1010, 2001) ;

- famille des fulgides (Yokoyama et al., Chem. Lett., 687, 1997) dont indole fulgide (Janicki et al., J. Am. Chem. Soc., 117, 8524, 1995), bisnaphthol-based chiral fulgide derivatives (Yokoyama et al., Chem. Lett., 687, 1997) ;
- famille des diarylethenes (Uchida et al., Chem. Lett., 654, 2000 ; Yamaguchi et al., Chem. Mater., 12, 869, 2000) dont diarylethylene-bis imine (Denekamp et al., Adv. Mater., 10, 1081, 1998) ;
- famille des alcènes surencombrés (Feringa et al., J. Am. Chem. Soc., 117, 9929, 1995 ; Huck et al., Science, 273, 1686, 1996).

Dans ce cas, il se produira par exemple une photo-isomérisation trans-cis ou une photo-cyclisation sous l'effet d'un rayonnement UV de longueur d'onde comprise entre 250 et 365 nm.

Le changement inverse se produira sous l'action d'un rayonnement visible de longueur d'onde supérieur ou égal à 435 nm.

Les irradiations électromagnétiques sont appliquées avec des rayonnements ayant une énergie comprise typiquement entre 1 et 100 mJ/cm$^2$ et des temps d'irradiation pouvant varier entre quelques secondes et quelques dizaines de minutes (entre 1 et 3600 secondes), typiquement de l'ordre de quelques minutes (c'est-à-dire entre 60 et 600 secondes).

Le matériau à cristaux liquides résultant de la formation d'un réseau de polymère simultanément à des modifications du pas de l'hélice définissant la structure du mélange initial permet de réfléchir la lumière sur une bande de longueurs d'onde élargie, typiquement, dans le spectre visible, de l'ordre de quelques centaines de nanomètres (entre 100 et 500 nanomètres).

Enfin, lorsque le matériau comprend moins de 5% de réseau polymère, la propriété de réflexion de la lumière peut être modifiée par application d'un champ électrique alternatif avec une fréquence typiquement de l'ordre de 1 kHz. Ce sera le cas par exemple lorsque le cristal liquide photoréactif (B) du mélange est dans une concentration minoritaire, entre 3% et 5%.

Dans ce cas, le matériau à cristaux liquides est adressable. La cellule optique passe progressivement d'un état réflecteur à un état diffusif (typiquement à partir de 1 V/$\mu$m) puis transparent (typiquement à partir de 10 V/$\mu$m).

## Revendications

1. Procédé d'élaboration d'un matériau à cristaux liquides adressable par un champ électrique, **caractérisé en ce qu'**il comprend les étapes consistant à :

- Former un mélange de cristaux liquides ayant une structure en hélice comprenant un premier cristal liquide (A) non-photoréactif et un deuxième cristal liquide (B) photoréactif, le premier cristal liquide (A) comprenant des premières molécules de cristal liquide (A1) chirales et le premier cristal liquide (A) étant à anisotropie diélectrique positive, et le deuxième cristal liquide (B) étant dans une concentration comprise entre 3% et 5% du mélange ;
- Appliquer un premier traitement au mélange de cristaux liquides, le premier traitement étant réalisé à température constante et modifiant un pas de l'hélice du mélange ;
- Appliquer un deuxième traitement au mélange de façon à ce que le deuxième cristal liquide (B) forme un réseau de polymère, le deuxième traitement étant effectué pendant tout ou partie de la durée du premier traitement, la formation du réseau de polymère pendant tout ou partie de la durée du premier traitement permettant au matériau à cristaux liquides de conserver une mémoire des modifications du pas de l'hélice.

2. Procédé selon la revendication 1, **caractérisé en ce que** le mélange présente un polymorphisme comprenant au moins une phase cholestérique et/ou smectique C chirale.

3. Procédé selon l'une quelconque des revendications 1 ou 2, **caractérisé en ce que** le premier cristal liquide (A) comprend en outre des deuxièmes molécules de cristal liquide (A2) pour qu'il soit apte à changer de signe d'anisotropie diélectrique en fonction de la fréquence.

4. Procédé selon l'une quelconque des revendications précédentes, **caractérisé en ce que** le deuxième cristal liquide (B) est apte à être activé par irradiation UV.

5. Procédé selon l'une quelconque des revendications précédentes, **caractérisé en ce que** le mélange comprend en outre un agent photo-initiateur (C) pour favoriser la formation du réseau de polymère sous irradiation UV.

6. Procédé selon l'une quelconque des revendications précédentes, **caractérisé en ce que** le mélange comprend en outre un agent dispersant (D) pour favoriser une dispersion des composants du mélange et modifier une dynamique du matériau à cristaux liquides lors d'un adressage électrique.

7. Procédé selon l'une quelconque des revendications précédentes, **caractérisé en ce que** le mélange comprend en outre un inhibiteur de polymérisation thermique (E).

8. Procédé selon l'une quelconque des revendications précédentes, **caractérisé en ce que** le mélange comprend en outre un agent absorbant (F) apte à absorber le rayonnement UV de façon à ce que le matériau à cristaux liquides ait un gradient de structure et/ou de fonction.

9. Procédé selon l'une quelconque des revendications précédentes, **caractérisé en ce que** le deuxième traitement est une irradiation UV apte à polymériser le mélange.

10. Procédé selon la revendication 9, **caractérisé en ce que** l'irradiation UV est effectuée avec un rayonnement UV ayant une longueur d'onde de 365 nm et une puissance de 0,1 mW/cm$^2$, pendant un temps d'exposition compris entre 30 et 60 minutes.

11. Procédé selon l'une quelconque des revendications 9 ou 10, **caractérisé en ce que** le deuxième traitement permet une réticulation du mélange.

12. Procédé selon l'une quelconque des revendications 9 ou 10, **caractérisé en ce que** le deuxième traitement permet une gélification du mélange.

13. Procédé selon l'une quelconque des revendications 1 à 8, **caractérisé en ce que** le deuxième traitement est une trempe apte à vitrifier le mélange.

14. Procédé selon l'une quelconque des revendications précédentes, **caractérisé en ce que** le premier traitement consiste à appliquer un champ électrique au mélange.

15. Procédé selon la revendication 14, **caractérisé en ce que** le champ électrique a une fréquence de 1 kHz et varie de 0,5 à 20 V/$\mu$m.

16. Procédé selon l'une quelconque des revendications 1 à 13, **caractérisé en ce que** le premier traitement consiste à appliquer un champ magnétique au mélange.

17. Procédé selon la revendication 16, **caractérisé en ce que** le champ magnétique varie de 2 à 15 kG.

18. Procédé selon l'une quelconque des revendications 1 à 13, **caractérisé en ce que** le premier traitement consiste à appliquer une pression mécanique sur le mélange.

19. Procédé selon l'une quelconque des revendications 1 à 13, **caractérisé en ce que** le premier traitement est une irradiation électromagnétique, et le premier cristal liquide comprend en outre des troisièmes molécules de cristal liquide (A3) afin que le premier traitement modifie la conformation moléculaire du mélange.

20. Procédé selon la revendication 19, **caractérisé en ce que** l'irradiation électromagnétique est effectuée par un rayonnement UV ayant une longueur d'onde comprise entre 250 et 365 nm, une énergie comprise entre 1 et 100 mJ/cm$^2$, et pendant un temps d'exposition compris entre 1 et 3600 secondes.

21. Procédé selon la revendication 20, **caractérisé en ce que** le temps d'exposition est compris entre 60 et 600 secondes.

22. Procédé selon la revendication 19, **caractérisé en ce que** l'irradiation électromagnétique est effectuée par un rayonnement visible ayant une longueur d'onde supérieure à 435 nm, une énergie comprise entre 1 et 100 mJ/cm$^2$, et pendant un temps d'exposition compris entre 1 et 3600 secondes.

23. Procédé selon la revendication 22, **caractérisé en ce que** le temps d'exposition est compris entre 60 et 600 secondes.

24. Procédé selon l'une quelconque des revendications précédentes, **caractérisé en ce que**, avant d'appliquer l'un quelconque des traitements, le mélange est introduit dans une cellule capacitive comprenant deux substrats (1) recouverts d'un film conducteur (2).

25. Dispositif à cristaux liquides comprenant un substrat (1) sur lequel est disposé un matériau à cristaux liquides (4) élaboré conformément au procédé selon l'une quelconque des revendications précédentes.

26. Dispositif à cristaux liquides selon la revendication 25, **caractérisé en ce qu'**il comprend en outre un autre substrat (1) recouvrant le matériau à cristaux liquide (4), de façon à former une cellule capacitive.

**Claims**

1. A method for producing a liquid crystal material that can be addressed by an electric field, **characterised in that** it comprises the steps of:

    - Forming a liquid crystal mixture with a helical structure comprising a first non-photoreactive liquid crystal (A) and a second photoreactive liquid crystal (B), the first liquid crystal (A) comprising first chiral liquid crystal molecules (A1) and the first liquid crystal (A) having a positive dielectric anisotropy, and the second liquid crystal (B) being in a concentration comprised between 3% and 5% of the mixture;
    - Applying a first treatment to the liquid crystal mixture, the first treatment being carried out at constant temperature and modifying a pitch of the helix of the mixture;

- Applying a second treatment to the mixture such that the second liquid crystal (B) forms a polymer network, the second treatment being performed during all or part of the first treatment, formation of the polymer network during all or part of the first treatment enabling the liquid crystal material to keep a memory of the modifications to the pitch of the helix.

2. The method of claim 1, **characterised in that** the mixture presents a polymorphism comprising at least a cholesteric phase and/or a smectic C chiral phase.

3. The method of any of claims 1 or 2, **characterised in that** the first liquid crystal (A) further comprises second liquid crystal molecules (A2) so that it is adapted for changing sign of dielectric anisotropy depending on the frequency.

4. The method of any of the previous claims, **characterised in that** the second liquid crystal (B) is adapted for being activated by UV irradiation.

5. The method of any of the previous claims, **characterised in that** the mixture further comprises a photoinitiator agent (C) to enhance the formation of the polymer network in UV irradiation.

6. The method of any of the previous claims, **characterised in that** the mixture further comprises a dispersal agent (D) to enhance a dispersion of the components of the mixture and modify a dynamic of the liquid crystal material during electrical addressing.

7. The method of any of the previous claims, **characterised in that** the mixture further comprises a thermal polymerisation inhibitor (E).

8. The method of any of the previous claims, **characterised in that** the mixture further comprises an absorbing agent (F) adapted for absorbing UV radiation so that the liquid crystal material has a structure and/or function gradient.

9. The method of any of the previous claims, **characterised in that** the second treatment is UV irradiation adapted for polymerising the mixture.

10. The method of claim 9, **characterised in that** the UV irradiation is performed with UV radiation having a wavelength of the order of 365 nm and a power of 0.1 mW/cm$^2$, for an exposure time comprised between 30 and 60 minutes.

11. The method of any of claims 9 or 10, **characterised**

**in that** the second treatment enables cross-linking of the mixture.

12. The method of any of claims 9 or 10, **characterised in that** the second treatment enables gelation of the mixture.

13. The method of any of claims 1 to 8, **characterised in that** the second treatment is a quenching adapted for vitrifying the mixture.

14. The method of any of the previous claims, **characterised in that** the first treatment consists in applying an electric field to the mixture.

15. The method of claim 14, **characterised in that** the electric field has a frequency of 1 kHz and varies from 0.5 to 20 V/$\mu$m.

16. The method of any of claims 1 to 13, **characterised in that** the first treatment consists in applying a magnetic field to the mixture.

17. The method of claim 16, **characterised in that** the magnetic field varies from 2 to 15 kG.

18. The method of any of claims 1 to 13, **characterised in that** the first treatment consists in applying a mechanical pressure to the mixture.

19. The method of any of claims 1 to 13, **characterised in that** the first treatment is an electromagnetic irradiation, and the first liquid crystal further comprises third liquid crystal molecules (A3) in order for the first treatment to modify the molecular conformation of the mixture.

20. The method of claim 19, **characterised in that** the electromagnetic irradiation is performed by UV radiation having a wavelength comprised between 250 and 365 nm, an energy comprised between 1 and 100 mJ/cm$^2$, and for an exposure time comprised between 1 and 3600 seconds.

21. The method of claim 20, **characterised in that** the exposure time is comprised between 60 and 600 seconds.

22. The method of claim 19, **characterised in that** the electromagnetic irradiation is performed by visible radiation having a wavelength of over 435 nm, an energy comprised between 1 and 100 mJ/cm$^2$, and for an exposure time comprised between 1 and 3600 seconds.

23. The method of claim 22, **characterised in that** the exposure time is comprised between 60 and 600 seconds.

**24.** The method of any of the previous claims, **characterised in that**, before applying any one of the treatments, the mixture is introduced into a capacitive cell comprising two substrates (1) covered with a conducting film (2).

**25.** A liquid crystal device comprising a substrate (1) on which is placed a liquid crystal material (4) produced in accordance with the method of any of the preceding claims.

**26.** The liquid crystal device of claim 25, **characterised in that** it further comprises another substrate (1) covering the liquid crystal material (4), so as to form a capacitive cell.

**Patentansprüche**

**1.** Verfahren zur Herstellung eines durch ein elektrisches Feld adressierbaren Flüssigkeitskristallmaterials, **dadurch gekennzeichnet, dass** es die Schritte umfasst, die bestehen aus:

> - Bildung eines Flüssigkeitskristallgemischs mit einer Schraubenstruktur, das ein erstes nicht photoreaktives Flüssigkeitskristall (A) und ein zweites photoreaktives Flüssigkeitskristall (B) umfasst, wobei das erste Flüssigkeitskristall (A) erste chirale Flüssigkeitskristallmoleküle (A1) umfasst und das erste Flüssigkeitskristall (A) positiv dielektrisch anisotroph ist, und das zweite Flüssigkeitskristall (B) in einer Konzentration zwischen 3 % und 5 % des Gemischs inklusive ist,
> - Anwendung einer ersten Behandlung auf das Flüssigkeitskristallgemisch, wobei die erste Behandlung bei konstanter Temperatur durchgeführt wird und eine Schraubensteigung des Gemischs verändert,
> - Anwendung einer zweiten Behandlung auf das Gemisch, derart, dass das zweite Flüssigkeitskristall (B) ein Polymernetz bildet, wobei die zweite Behandlung während der gesamten oder eines Teils der Dauer der ersten Behandlung durchgeführt wird, wobei die Bildung des Polymernetzes während der gesamten oder eines Teils der Dauer der ersten Behandlung dem Flüssigkeitskristallmaterial erlaubt, eine Erinnerung an die Änderungen der Schraubensteigung zu behalten.

**2.** Verfahren nach Anspruch 1, **dadurch gekennzeichnet, dass** das Gemisch einen Polymorphismus aufweist, der mindestens eine cholesterische und/oder smektische C- chirale Phase aufweist.

**3.** Verfahren nach einem der Ansprüche 1 oder 2, **dadurch gekennzeichnet, dass** das erste Flüssigkeitskristall (A) weiterhin zweite Flüssigkeitskristallmoleküle (A2) umfasst, damit es imstande ist, das Vorzeichen der dielektrischen Anisotropie in Abhängigkeit von der Frequenz zu ändern.

**4.** Verfahren nach einem der vorangehenden Ansprüche, **dadurch gekennzeichnet, dass** das zweite Flüssigkeitskristall (B) imstande ist, durch UV-Bestrahlung aktiviert zu werden.

**5.** Verfahren nach einem der vorangehenden Ansprüche, **dadurch gekennzeichnet, dass** das Gemisch weiterhin einen Photoinitiator (C) umfasst, um die Bildung eines Polymernetzes unter UV-Bestrahlung zu fördern.

**6.** Verfahren nach einem der vorangehenden Ansprüche, **dadurch gekennzeichnet, dass** das Gemisch weiterhin ein Dispersionsmittel (D) umfasst, um die Dispersion der Bestandteile des Gemischs zu fördern und eine Dynamik des Flüssigkeitskristallmaterials bei einer elektrischen Adressierung zu ändern.

**7.** Verfahren nach einem der vorangehenden Ansprüche, **dadurch gekennzeichnet, dass** das Gemisch weiterhin einen thermischen Polymerisationsinhibitor (E) umfasst.

**8.** Verfahren nach einem der vorangehenden Ansprüche, **dadurch gekennzeichnet, dass** das Gemisch weiterhin ein Absorptionsmittel (F) umfasst, das imstande ist, die UV-Strahlung derart zu absorbieren, dass das Flüssigkeitskristallmaterial einen Struktur- und/oder einen Funktionsgradienten hat.

**9.** Verfahren nach einem der vorangehenden Ansprüche, **dadurch gekennzeichnet, dass** die zweite Behandlung eine UV-Bestrahlung ist, die imstande ist, das Gemisch zu polymerisieren.

**10.** Verfahren nach Anspruch 9, **dadurch gekennzeichnet, dass** die UV-Bestrahlung mit einer UV-Strahlung durchgeführt wird, die eine Wellenlänge von 365 nm und eine Leistung von 0,1 mW/cm$^2$ hat während einer Expositionszeit zwischen 30 und 60 Minuten inklusive.

**11.** Verfahren nach einem der vorangehenden Ansprüche, **dadurch gekennzeichnet, dass** die zweite Behandlung eine Retikulierung des Gemischs erlaubt.

**12.** Verfahren nach einem der Ansprüche 9 oder 10, **dadurch gekennzeichnet, dass** die zweite Behandlung eine Gelierung des Gemischs erlaubt.

**13.** Verfahren nach einem der Ansprüche 1 bis 8, **dadurch gekennzeichnet, dass** die zweite Behandlung eine Vergütung ist, die imstande ist, das Gemisch zu vitrifizieren.

**14.** Verfahren nach einem der vorangehenden Ansprüche, **dadurch gekennzeichnet, dass** die erste Behandlung darin besteht, auf das Gemisch ein elektrisches Feld anzuwenden.

**15.** Verfahren nach Anspruch 14, **dadurch gekennzeichnet, dass** das elektrische Feld eine Frequenz von 1 kHz hat und von 0,5 bis 20 V/$\mu$m schwankt.

**16.** Verfahren nach einem der Ansprüche 1 bis 13, **dadurch gekennzeichnet, dass** die erste Behandlung darin besteht, auf das Gemisch ein Magnetfeld anzuwenden.

**17.** Verfahren nach Anspruch 16, **dadurch gekennzeichnet, dass** das Magnetfeld von 2 bis 15 kG schwankt.

**18.** Verfahren nach einem der Ansprüche 1 bis 13, **dadurch gekennzeichnet, dass** die erste Behandlung darin besteht, auf das Gemisch einen mechanischen Druck anzuwenden.

**19.** Verfahren nach einem der Ansprüche 1 bis 13, **dadurch gekennzeichnet, dass** die erste Behandlung eine elektromagnetische Bestrahlung ist, und das erste Flüssigkeitskristall umfasst weiterhin dritte Flüssigkeitskristallmoleküle (A3), damit die erste Behandlung die molekulare Konformation des Gemischs ändert.

**20.** Verfahren nach Anspruch 19, **dadurch gekennzeichnet, dass** die elektromagnetische Bestrahlung mit einer UV-Strahlung durchgeführt wird, die eine Wellenlänge zwischen 250 und 365 nm inklusive, eine Energie zwischen 1 und 100 mJ/cm$^2$ inklusive hat und während einer Expositionszeit zwischen 1 und 3600 Sekunden inklusive.

**21.** Verfahren nach Anspruch 20, **dadurch gekennzeichnet, dass** die Expositionszeit zwischen 60 bis 600 Sekunden inklusive ist.

**22.** Verfahren nach Anspruch 19, **dadurch gekennzeichnet, dass** die elektromagnetische Bestrahlung mit einer sichtbaren Strahlung durchgeführt wird, die eine Wellenlänge über 435 nm, eine Energie zwischen 1 und 100 mJ/cm$^2$ inklusive hat und während einer Expositionszeit zwischen 1 und 3600 Sekunden inklusive.

**23.** Verfahren nach Anspruch 22, **dadurch gekennzeichnet, dass** die Expositionszeit zwischen 60 und 600 Sekunden inklusive ist.

**24.** Verfahren nach einem der vorangehenden Ansprüche, **dadurch gekennzeichnet, dass** das Gemisch vor Anwendung einer der Behandlungen in eine kapazitive Zelle eingeführt wird, die zwei mit einer leitenden Folie (2) bedeckte Substrate (1) umfasst.

**25.** Flüssigkeitskristallvorrichtung, die ein Substrat (1) umfasst, auf dem ein Flüssigkeitskristallmaterial (4) angeordnet ist, das gemäß dem Verfahren nach einem der vorangehenden Ansprüche hergestellt wurde.

**26.** Flüssigkeitskristallvorrichtung nach Anspruch 25, **dadurch gekennzeichnet, dass** sie weiterhin ein anderes Substrat (1) umfasst, das das Flüssigkeitskristallmaterial (4) bedeckt, so dass eine kapazitive Zelle gebildet wird.

**Figure 1**

**Figure 2**

## RÉFÉRENCES CITÉES DANS LA DESCRIPTION

### Documents brevets cités dans la description

- EP 1295929 A
- EP 1249483 A
- US 6217948 B
- EP 0982605 A
- US 20030098442 A
- US 20040011994 A
- EP 0346911 A
- GB 2355720 A
- US 6010643 A
- WO 9857223 A
- EP 0711780 B1
- US 005641850 A

### Littérature non-brevet citée dans la description

- **D.J. Broer ; J. Lub ; G.N. Mol.** *Nature,* 1995, vol. 378, 467
- **L.-C. Chien.** Recent Advances in Liquid Crystal Polymers. American Chemical Society Book Series, 1995
- **Kurihara et al.** *Chem. Mater.,* 2001, vol. 13, 1992
- **Kusumoto et al.** *Mol. Cryst. Liq. Cryst.,* 1993, vol. 14, 727
- **Negishi et al.** *Chem. Lett.,* 1996, vol. 319
- *CHEM. LETT.,* 1996, vol. 583
- **Bobrovsky et al.** *Adv. Mater.,* 2000, vol. 12, 1180-3
- **Kitaeva et al.** *Mol. Cryst. Liq. Cryst.,* 1992, vol. 2, 261-279
- **Moriyama et al.** *J. Mater. Chem.,* 2001, vol. 11, 1003-1010
- **Yokoyama et al.** *Chem. Lett.,* 1997, vol. 687
- **Janicki et al.** *J. Am. Chem. Soc.,* 1995, vol. 117, 8524
- **Uchida et al.** *Chem. Lett.,* 2000, vol. 654
- **Yamaguchi et al.** *Chem. Mater.,* 2000, vol. 12, 869
- **Denekamp et al.** *Adv. Mater.,* 1998, vol. 10, 1081
- **Feringa et al.** *J. Am. Chem. Soc.,* 1995, vol. 117, 9929
- **Huck et al.** *Science,* 1996, vol. 273, 1686